(19) Europäisches Patentamt / European Patent Office / Office européen des brevets

(11) **EP 4 290 427 A1**

(12) **EUROPEAN PATENT APPLICATION**

(43) Date of publication:
**13.12.2023  Bulletin 2023/50**

(21) Application number: **22177383.1**

(22) Date of filing: **06.06.2022**

(51) International Patent Classification (IPC):
*G06N 20/00* (2019.01)

(52) Cooperative Patent Classification (CPC):
**G06N 20/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Blue Prism Limited
Warrington WA2 0XP (GB)**

(72) Inventors:
• **REID, John Edward
  Warrington, WA2 0XP (GB)**
• **MAVADIA, Sandeep
  Warrington, WA2 0XP (GB)**

(74) Representative: **Carpmaels & Ransford LLP
One Southampton Row
London WC1B 5HA (GB)**

(54) **SYSTEMS AND METHODS FOR PREDICTING THE VALUE OF A CONTINUOUS OUTPUT**

(57)     A computer-implemented method for learning a distance metric, D, for an input space according to a large margin nearest neighbour model adapted for outputs having a continuous value. The method comprising determining a transform, L, for the input space, wherein the transform, L, is configured to correlate the distance between input data points in the input space with the difference between the values of continuous outputs associated with the input data points; applying the transform, L, to the input space; and learning the distance metric, D, from the transformed input space.

*FIG. 3*

☆ : data point under consideration
○ : targets
△ : imposters

Processed by Luminess, 75001 PARIS (FR)

**Description**

**Field of the Invention**

The present invention relates to systems and methods for predicting the value of a continuous output, and to systems and methods for learning a distance metric according to a large margin nearest neighbour model adapted for outputs having a continuous value.

**Background of the Invention**

Increasingly, machine learning tools and techniques are being used to automate and improve the accuracy of decision-making. In particular, problems that require the analysis of multidimensional variables in order to derive patterns and metrics for the purposes of predicting outputs for given inputs can benefit from the analytical and learning capabilities of machine learning tools and techniques. An example of a branch of machine learning that may be used for predicting outputs for given inputs is that of "supervised learning". Supervised learning provides a branch of machine learning that relies on the use functions that may be inferred from training data, i.e., labelled datasets (made up of input-output pairs) related to a particular problem, to accurately predict outputs to said problem for given inputs. It is important, therefore, that the labelled datasets, from which functions may be inferred, are maintained and organised in such a manner that allows for the improved derivation of insights therefrom. Accordingly, by iteratively analysing, transforming and updating the labelled datasets available to supervised learning models, the accuracy of the resulting decision-making, i.e., output predicting, may be improved significantly.

Methods of supervised learning may include a non-parametric model, i.e., a model that does not learn parameters from the training data available to the model for the subsequent use of these parameters to make decisions, but rather, where the decisions made by the model are a direct function of the available training data. More specifically, this means that a decision can be made, i.e., an output may be predicted for a given input, using any functional form of a mapping function between the given input and the associated output that can be derived from the available training data. Relative to parametric models, for which the number of parameters is fixed with respect to the amount data, non-parametric models make fewer assumptions about the training data in a trade-off for decreased accuracy but increased ease of use. Non-parametric models are therefore more versatile and reduce the need to build a model, tune various parameters and make additional assumptions. The effective use of non-parametric models, however, require the training data available to the model to be well-organised.

An example of a non-parametric model that may be used in supervised learning methods for decision-making, i.e., for predicting outputs to problems for given inputs, is that of the "K-nearest neighbours", KNN, algorithm. In short, the KNN algorithm works on the premise that objects, e.g., input data points in an input space, having similar properties, e.g., labelled outputs, exist in close proximity. Predictions of an output are therefore made on the basis of identifying a predetermined number (K) of training samples, e.g., input data points in an input space, closest in distance to a new input data point, i.e., neighbours to the new input data point, and using the labels, i.e., associated outputs, of the identified input data points to predict an output for the new input data point.

The accuracy of non-parametric models, such as the KNN algorithm, are heavily dependent, therefore, on the distance metric used to compute the distances between samples in the training data, e.g., input data points in an input space. Accordingly, in order to improve the accuracy of non-parametric models, such as the KNN algorithm, a distance metric may be learnt for the training data available to the model, that allows for more accurately determining the relationship between a data input and other input data points in an input space, such that a more accurate and informed output prediction can be made. The process of learning a distance metric is called "metric learning". Metric learning methods warp or transform an input space such that subsequently applied algorithms are more effective. The basic idea is to try to bring similar (in terms of outcome, e.g., associated output) samples closer together whilst keeping dissimilar samples well separated. As mentioned, non-parametric models rely heavily on the distances between samples in an input space and so their performance can be substantially improved with judicious use of metric learning.

A known model for metric learning that is suitable for non-parametric models, such as the KNN algorithm, is that of the Large Margin Nearest Neighbour, LMNN, model. The known LMNN model, however, is only applicable for when the outcome of a given supervised learning model is discrete, i.e., for classification problems. The known LMNN model operates to warp an input space so that nearby samples in the input space have the same class. This improves the accuracy of any subsequent classification (i.e., discrete variable) predictions made by a non-parametric model, such as the KNN algorithm.

The known LMNN metric learning model is not applicable for when the outcome of a supervised learning model has a continuous value. Accordingly, there is a desire to learn a distance metric that may be used to improve the accuracy of decision-making for regression problems, i.e., for outcomes having a continuous value.

## Summary of the Invention

As mentioned above, the known LMNN metric learning model is limited to supervised learning models that are used to predict discrete output values. In developing on the known LMNN model, the present application considers how the known LMNN algorithm model may be adapted to provide a transform of, and subsequently learn a distance metric from, an input space labelled with continuous (i.e., non-discrete) output values. By learning a distance metric in this way, the accuracy of predictions of continuous outputs using non-parametric models, such as the KNN algorithm, may be improved.

Thus, it is a desired objective to learn a distance metric according to a large margin nearest neighbour model adapted for outputs having a continuous value. Upon this, there is a further desired objective to predict the value of a continuous output.

According to an aspect of the present disclosure, there is provided a computer-implemented method for learning a distance metric, D, for an input space according to a large margin nearest neighbour model adapted for outputs having a continuous value. The method comprises: determining a transform, L, for the input space, wherein the transform, L, is configured to correlate the distance between input data points in the input space with the difference between the values of continuous outputs associated with the input data points; applying the transform, L, to the input space; and learning the distance metric, D, from the transformed input space.

According to an aspect of the present disclosure, there is provided a computer-implemented method for predicting the value of a continuous output. The method comprises using a distance metric, D, learnt for an input space.

According to another aspect of the present disclosure, there is provided a system comprising one or more processors configured to perform the methods described herein.

According to another aspect of the present disclosure, there is provided a computer-readable medium comprising instructions for causing a computer to execute instructions according to the methods described herein.

According to another aspect of the present disclosure, there is provided a computer program comprising instructions which, when the program is executed by a computer, cause the computer to carry out the steps of the methods described herein.

Optional features are set out in the appended dependent claims.

These, and other aspects of the present disclosure will be better appreciated and understood when considered in conjunction with the following description and the accompanying drawings. The following description, while indicating various embodiments of the disclosure and numerous specific details thereof, is given by way of illustration and not of limitation. Many substitutions, modifications, additions, or rearrangements may be made within the scope of the disclosure, and the disclosure includes all such substitutions, modifications, additions or rearrangements.

## Brief Description of the Drawings

Embodiments of the present disclosure will now be described, by way of example only, with reference to the accompanying drawings, in which:

FIG. 1 schematically illustrates a system for performing one or more of the methods disclosed herein;

FIG. 2 is a flowchart of a computer-implemented method for learning a distance metric, D, for an input space according to a large margin nearest neighbour model adapted for outputs having a continuous value according to an embodiment of the invention;

FIG. 3 schematically illustrates how an input space may be transformed, and a distance metric subsequently learnt, according to an embodiment of the invention;

FIG. 4 is a flowchart for a computer-implemented method for predicting the value of a continuous output according to an embodiment of the invention; and

FIG. 5 schematically illustrates how a K-nearest neighbours algorithm may be used according to an embodiment of the invention.

## Detailed Description of Embodiments of the Invention

In the following description, numerous specific details are set forth in order to provide a thorough understanding of embodiments of the invention. It will be apparent, however, to one having ordinary skill in the art the specific details need not be employed to practice the embodiments.

The methods and systems described herein may be used in the context of machine learning tools and techniques, particularly, supervised learning used for the prediction of outputs having a continuous value. Embodiments of the invention will be described in the context of supervised learning, however, it would be apparent to a person skilled in the art that other suitable machine learning tools and techniques may also be used to perform the embodiments of the invention.

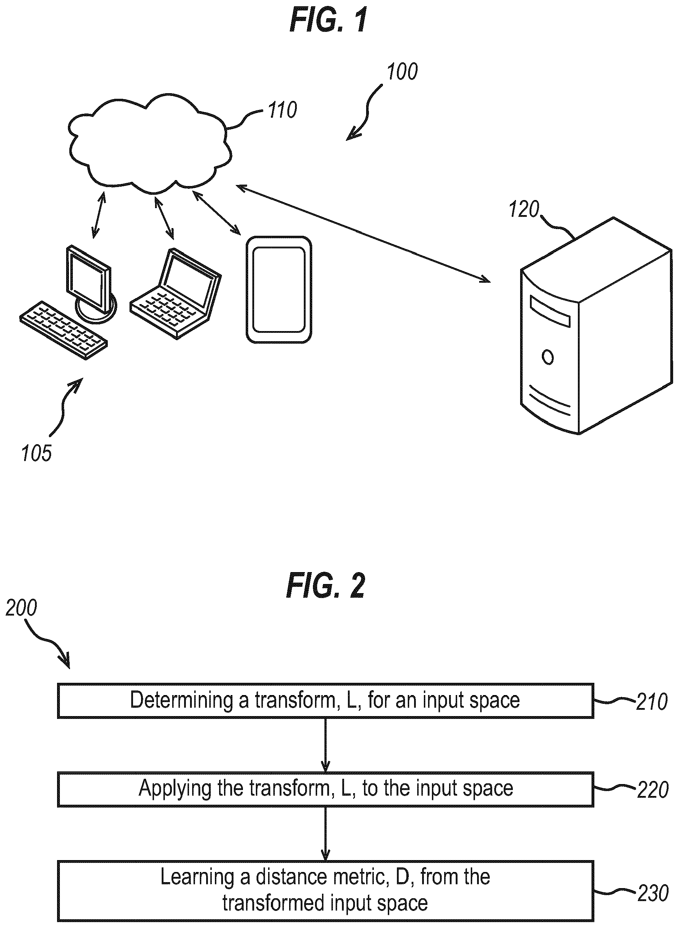

FIG. 1 is a schematic illustration of a system for performing one or more of the methods disclosed herein. The system 100 may include client computing devices 105 and a server 120 that are configured to be communicatively coupled over network 110.

The network 110 may be wired or wireless network such as the Internet, an intranet, a Local Area Network (LAN), a Wide Area Network (WAN), a Near-field Communication (NFC) network, Bluetooth, infrared, radio frequency, a cellular network or another type of network. It will be understood that the network 110 may be a combination of multiple different kinds of wired or wireless networks.

Each client computing device 105 may be a smart phone, tablet computer, laptop computer, a computer, personal data assistant, or any other type of mobile device with a hardware processor that is configured to process instructions and is connected to one or more portions of the network 110. Each client computing device 105 may have a graphical user interface that is configured to allow a user to interact with a processor of the client computing device 105.

The server 120 may include physical computing devices residing at a particular location or may be deployed in a cloud computing network environment. In the present disclosure, "cloud computing" may be defined as a model for enabling ubiquitous, convenient, on-demand network access to a shared pool of configurable computing resources (e.g., networks, servers, storage, applications, and services) that can be rapidly provisioned via virtualisation and released with minimal management effort or service provider interaction, and then scaled accordingly. A cloud model can be composed of various characteristics (e.g., on-demand self-service, broad network access, resource pooling, rapid elasticity, measured service, etc.), service models (e.g., Software as a Service (SaaS), Platform as a Service (PaaS), Infrastructure as a Service (IaaS), and deployment models (e.g., private cloud, community cloud, public cloud, hybrid cloud, etc.). The server 120 may include any combination of one or more computer-usable or computer-readable media. In some embodiments, the server 120 may be configured to perform at least part of the methods disclosed herein. The server 120 may include one or more processing devices having memory (e.g., read only memory (ROM) and random-access memory (RAM)) for storing processor-executable instructions and one or more processors that execute the processor-executable instructions. The processing devices may include two or more processors and the processors may operate in a parallel or distributed manner. The processing devices may execute an operating system or other software associated with the methods disclosed herein.

FIG. 2 is a flowchart of a computer-implemented method 200 for learning a distance metric, D, for an input space according to a large margin nearest neighbour model adapted for outputs having a continuous value, according to an embodiment of the invention. The method 200 may be performed on any suitable processor, for example, on a processor located on the server 120.

As discussed above, the Large Margin Nearest Neighbour, LMNN, model provides a known metric learning algorithm used to transform an input space and learn a distance metric for (i.e., over) an input space such that the subsequent use of a non-parametric model for the prediction of discrete output variables to solve classification problems is improved.

As will be appreciated by a person skilled in the art, the term metric learning describes a process of determining model-specific distance metrics for datasets. A distance metric describes a function that defines the distance between data points in a dataset as a real, non-negative numerical value. A distance metric provides an indication of how close data points are with respect to one another. Methods of supervised learning often require a measure of distance between data points. While standard distance metrics are available, metric learning provides a means for determining model-specific distance metrics that can be subsequently used to improve the accuracy of predictions made by a non-parametric model relative to when standard distance metrics are employed. By understanding the closeness, and therefore similarity, between data points in a dataset, for example, input data points in an input space (each labelled with a corresponding output), accurate predictions for outputs corresponding to new data inputs may be provided.

The term input space as used herein describes a particular representation of samples, e.g., input data points, by a user and/or model. From this input space, labelled samples are possible combinations of values, i.e., input data points, taken from the input space, each labelled with an associated output value.

The method 200 for learning a distance metric, D, for an input space according to a large margin nearest neighbour model adapted for outputs having a continuous value begins at step 210, in which a transform, L, is determined for the input space. The determined transform, L, is configured to correlate the distance between input data points in the input space with the difference between the values of continuous outputs associated with the input data points.

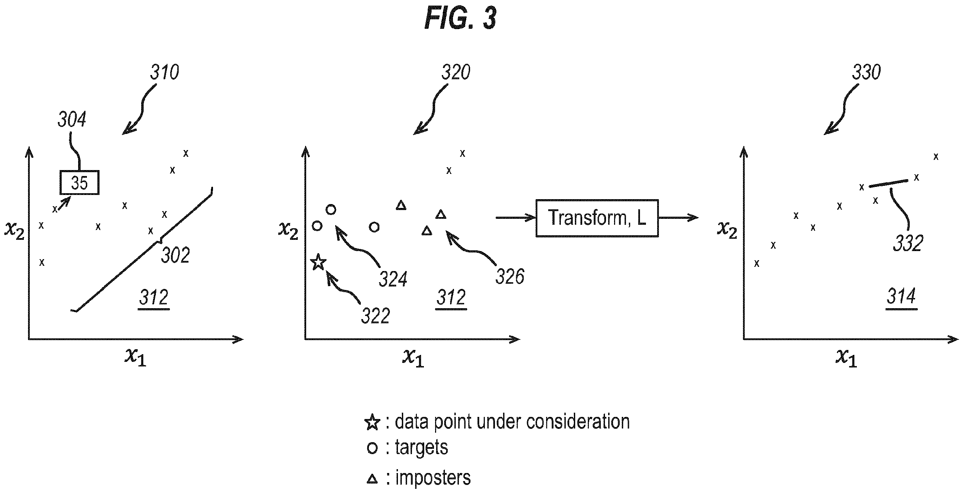

Referring now to FIG. 3, a schematic illustration of how an input space 312 may be transformed, and a distance metric subsequently learnt, according to an embodiment of the invention, is shown. Three graphs, 310, 320 and 330 are shown. Graph 310 illustrates an example of an input space 312 according to an embodiment of the invention. The input space 312 may comprise one or more input data points 302, each of which may be characterised by one or more input dimensions (i.e., input variables). The input space 312 may be characterised by a vector space. In the example shown in graph 310, each input data point 302 is characterised by two input dimensions, $x_1$ and $x_2$. It would be apparent to a person skilled in the art, that the input data points 302 need not be limited to two input dimensions and may instead have any whole number of input dimensions in the input space 312.

In an embodiment of the invention, the input data points 302 that make up the input space 312 may comprise input data points that have been manually labelled with a corresponding output value 304 and added to the input space 312 during building and/or calibrating of a supervised learning model to which the input space 312 belongs. The input space 312 may also comprise input data points 302 for which previous predictions have been made during run-time of the supervised learning model. The input data points 302 for which previous predictions have been made may or may not be subsequently verified, e.g., manually, before being added to the input space 312. Each input data point 302 in the input space 312 is labelled with an associated continuous output value 304. The continuous output value 304 associated with each input data point 302 characterises an output, predicted or otherwise labelled for the input associated with the input data point 302, to the particular problem that the supervised learning model, to which the input space 312 belongs, is attempting to solve. In an embodiment of the invention, the input data points 302 that make up the input space 312 are derived from multidimensional inputs that have been standardised. The multidimensional inputs may be received by the supervised learning model during building of the model, run-time or otherwise and may be characterised by multiple discrete and/or continuous variables. In order to ensure that these multidimensional inputs may be subsequently processed efficiently and economically, the multidimensional inputs may be standardised with respect to each dimension (i.e., variable) of the input using input transformation techniques. For example, categorical discrete variables may be one-hot transformed, ordinal discrete variables may be converted to integer values, continuous variables may be left as is or may be rounded to a predetermined number of significant figures. It would be apparent to a person skilled in the art that any number of input transformation techniques may be performed to standardise the multidimensional inputs such that they are more efficiently and economically processed before or after they enter the input space 312.

In an embodiment of the invention, one or more of the variables of the multidimensional inputs that may be received by a supervised learning model may comprise a natural language text input. In order to ensure that such variables are suitably processed, an embodiment of the invention may comprise input transformation for natural language text input variables. In an embodiment of the invention, the input transformation of natural language text may be performed by breaking up whole words into smaller component parts using a tokenisation algorithm. A latent Dirichlet allocation, LDA, model may then be fitted to the available samples, wherein the samples are represented as bags of words and/or bags of tokens. Using several fitted parameters, the LDA model may then be used to discover particular topics in the natural language text data input, wherein each topic is provided by a distribution over certain words and tokens. These distributions may then be used as features that represent the samples.

One multidimensional input that may be received by a supervised learning model may comprise many different types of input variables. In an embodiment of the invention, each variable (i.e., dimension) of an input may be transformed separately, before all of the transformed variables are concatenated together to provide a sample input data point. A person skilled in the art will appreciate that the types of variables and the input transformation techniques described above are not exhaustive and any number of types of suitable input variables and input transformation techniques may be used.

Should it be determined that a sample input data point comprises too many dimensions or more dimensions than necessary for subsequent processing, an embodiment of the invention may comprise selectively reducing the dimensionality of the sample input data point using known dimensionality reduction techniques such that the sample input data point may more suitably be entered into the input space 312. As will be discussed in further detail below, dimensionality reduction may also take place when applying the transform, L, to the input space 312.

Referring again now to step 210 of method 200, a transform, L, is determined for the input space 312. The determined transform, L, is configured to correlate the distance between input data points 302 in the input space 312 with the difference between the values of continuous outputs 304 associated with the input data points 302.

As discussed, metric learning methods may be used to transform an input space such that subsequently applied supervised learning models are more effective. The known LMNN model seeks to transform an input space 312 so that nearby input data points 302 have the same class. The present invention, however, is concerned with trying to bring similar input data points 302, in terms of output 304, closer together in the input space 312, whilst keeping dissimilar input data points 302, in terms of output 204, well separated in the input space 312. In the context of the present invention, the outputs 304 associated with each input data point 302 in the input space 312 have a continuous value. By performing a transform in a such a manner, the subsequent distance metric, D, that is learnt may provide a more informed determination of closeness of data input points 302 in the input space 312, which may be subsequently used to determine a more accurate prediction for a continuous output value corresponding to a received new data input.

In an embodiment of the invention, the relationship between the distance metric, D, and the transform, L, may be given by equation 1, below:

$$D_{\mathbf{L}}\left(\vec{x}_i - \vec{x}_j\right) = \left\|\mathbf{L}(\vec{x}_i - \vec{x}_j)\right\|_2^2$$

where $\vec{x}_i$ and $\vec{x}_j$ represent distinct input data points 302 in an input vector space 312, 314 (where 314 represents a transformed input space, see graph 330), and wherein $D_{\mathbf{L}}$ represents the distance metric, D, i.e., a family of metrics over the transformed input space 314.

As discussed, an objective of metric learning in the context of the present disclosure is to learn a distance metric, D, for an input space 312, for which similar input data points 302, in terms of their associated continuous outputs 304, are grouped closer together, whilst dissimilar input data points 302, in terms of their associated continuous outputs 304, are well separated. In order to achieve this, an embodiment of the invention may comprise determining a transform, L, for an input space 312 by determining and minimising a loss function with respect to the transform, L.

A loss function provides a means for characterising the amount of error in an algorithm. In other words, a loss function provides a means for determining how well a particular algorithm models a set of data. By computing a loss function for a particular dataset belonging to a model, a parameter may be determined that enables for the minimisation of the amount of error, i.e., the amount of loss. By updating the loss function upon every instance of a sample being added to a dataset, the loss function may be used as a feedback mechanism to improve the accuracy of the algorithm employed.

In the context of the present invention, a loss function may be determined by considering each input data point 302 in the input space 312 and its relationship with respect to other input data points 302 in the input space 312. By characterising the relative distances between input data points 302 in the input space 312 (which should reflect their closeness in terms of associated continuous output value 304) in terms of a parameter (in this case, a transform, L) and weighting said distances according to how well they reflect the relative disparity in associated continuous output values 304, a parameter may be determined that minimises the amount of error provided in the prediction of the associated supervised learning model. In the context of the present invention, the parameter is the transform, L, for example a linear transform, that may be applied to the input space 312 to transform the input space 312 such that similar input data points 302, in terms of their associated continuous outputs 304, are grouped closer together, whilst dissimilar input data points 302, in terms of their continuous outputs 304, are well separated.

In an embodiment of the invention, determining the loss function may comprise, for each input data point 302 in the input space 312, identifying a predetermined number of targets and imposters from the other input data points in the input space. In determining the loss function, each input data point 302 in the input space 312 is considered separately. For each input data point 302, the targets are those other input data points 302 desired to be close to the input data point under consideration, and the imposters are those other input data points 302 desired to be far from the input data point under consideration.

Referring now to graph 320, which depicts the same input space 312 and input data points 302 as in graph 310, for a particular input data point under consideration 322, a predetermined number of targets 324 and imposters 326 may be identified. For the sake of simplicity, the predetermined number of targets 324 and imposters 326 chosen for the example shown in graph 320 is three each. It would be apparent to a person skilled in the art that the predetermined number of targets 324 and imposters 326 may be higher or lower.

In an embodiment of the invention, the predetermined number of targets 324 and imposters 326 may be identified from the 2X nearest neighbours, in terms of distance, from the input data point under consideration 322, wherein the targets 324 are those X neighbours of the 2X nearest neighbours with associated continuous output values 304 closest to the continuous output value 304 associated with the input data point under consideration 322, wherein the imposters 326 are the remaining X neighbours, and wherein X is a predetermined value.

In the context of targets 324 and imposters 326, by determining and minimising the loss function with respect to the transform, L, it is possible to determine a transform, L, that warps the input space 312 so as to minimise the distance between each input data point 302 in the input space 312 and its targets 324 and maximise the distance between each input data point 302 in the input space 312 and its imposters 326. In determining and minimising a loss function with respect to the transform, L, the transform, L, that may be determined need not be a square matrix. Should the transform, L, that is determined be a non-square matrix, the dimensionality of the data, i.e., the input data points, to which the transform is applied will be reduced. For example, input data points in an input space having a dimensionality of three may be reduced to having a dimensionality of two in a transformed input space. Of course, the dimensionality may also be maintained by the transform, L.

As discussed, in an embodiment of the invention, when determining the loss function, each term in the loss function may be weighted according to how well the relative distance between input data points 302 in the input space 312 reflects the relative difference in their associated values of continuous outputs 304. Terms of the loss function for which the input data points 302 under consideration have a stronger positive correlation between the relative distance between the input data points 302 and the relative difference in their associated values of continuous outputs 304 are more heavily weighted than those terms having a weaker correlation. That is to say, the loss function may be used to determine a transform, L, that accentuates the correlation discussed above.

In an embodiment of the invention, the weighting may be computed by weighting each term in the loss function according to the relative difference between the difference in the values of the continuous outputs 304 associated with the input data point under consideration 322 and an identified imposter 326 and the difference in the values of the continuous outputs 304 associated with the input data point under consideration 322 and an identified target 324.

A possible example of a loss function that may be used is the following objective function, J, that is to be minimised with respect to the parameter, L, i.e., the transform:

$$ J = \sum_{i,j,l} \eta_{ij}(1 - \eta_{il})\delta_{il} * \left( \frac{y_{il}^2}{y_{il}^2 + y_{ij}^2} \right) * [\epsilon + \left\| L(x_i - x_j) \right\|^2 - \left\| L(x_i - x_l) \right\|^2]_+ $$

where:

- $i,j$ and $l$ refers to samples, targets and imposters, respectively;
- $[a]_+ = \max(0, a)$ is a hinge loss;
- $x_i$ is the location of sample $i$ in the input space;
- $y_i$ is the label of sample $i$, e.g., the associated continuous output value;
- $\eta_{ij} = 1$ if sample $i$ has target $j$ and 0 otherwise;
- $\delta_{il} = 1$ if sample $i$ has imposter $l$ and 0 otherwise; and
- $y_{ij} = y_i - y_j$.

In order to minimise the objective function, J, with respect to the transform, L, one of any number of known suitable minimisation algorithms may be used. For example, the limited-memory Broyden-Fletcher-Goldfarb-Shanno algorithm may be used, using the gradient of the objective function, J, which may be computed as follows:

$$ \nabla J = 2 \sum_{i,j,l} \eta_{ij}\left(1 - \eta_{il}\right)\delta_{il} * \left( \frac{y_{ij}^2}{y_{il}^2 + y_{ij}^2} \right) $$
$$ * L\left\{ [(x_i - x_j)(x_i - x_j)^T] - [(x_i - x_l)(x_i - x_l)^T] \right\} $$

Referring back to method 200, following the determination of the transform, L, for the input space 312, the next step 220 of the method 200 comprises applying the determined transform, L, to the input space 312.

With reference to the example shown in graph 330, the input space 312 shown in graphs 310 and 320 has been transformed by the applying the transform, L, to the input space 312 to produce a transformed input space 314. As can be seen from graph 330, this transformed input space provides an updated composition of input data points 302, which seeks to improve the organisation of the input data points 302 so as to correlate the distance between input data points 302 in the input space 314 with the difference between the values of continuous outputs 304 associated with the input data points 302.

Referring back to method 200, following the application of the transform, L, to the input space 312 to produce a transformed input space 314, the next step 230 of the method 200 comprises learning a distance metric, D, from the transformed input space 314.

As discussed above with reference to equation 1, the distance metric, D may comprise a family of metrics over the transformed input space 314. In an embodiment of the invention, learning the distance metric, D, from the transformed input space 314 may comprise computing the Euclidian distances between input data points 302 in the transformed input space 314. Referring to graph 330, a distance 332 computed between two input data points 302 in the transformed input space 314 according to the learnt distance metric, D, is shown.

As discussed in the background section, by learning a specific distance metric, D, for an input space, the accuracy of resultant predictions from non-parametric supervised learning models that seek to evaluate distances in an input space using the learnt distance metric, D, may be improved.

With respect to another aspect of the present disclosure, the relationship between a distance metric, D, learnt for an input space and the prediction of a value of a continuous output corresponding to a received data input will be explored.

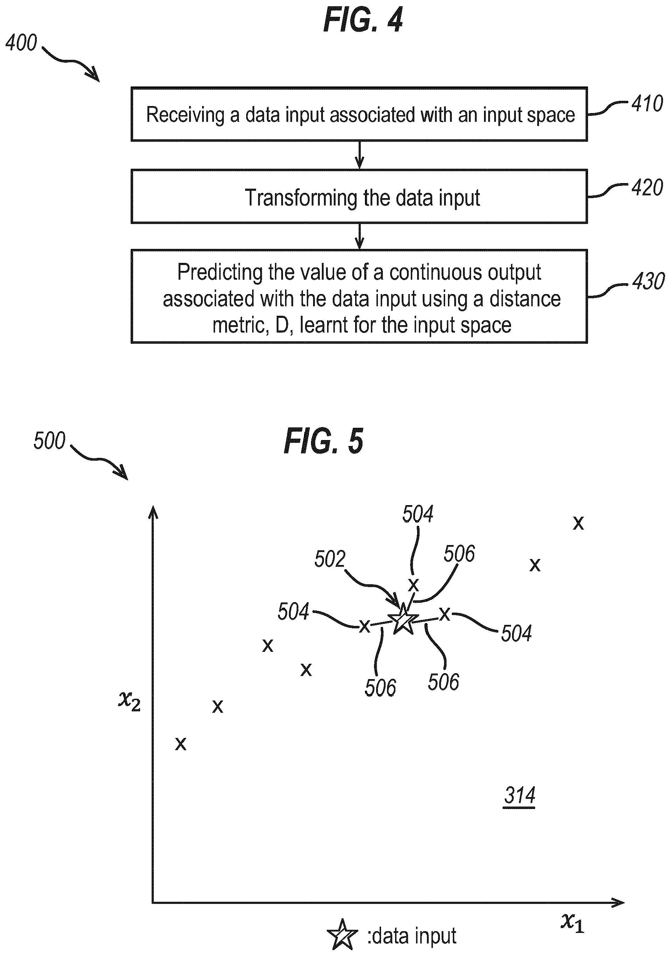

FIG. 4 is a flowchart of a computer-implemented method 400 for predicting the value of a continuous output, according to an embodiment of the invention. The method may solely comprise predicting the value of a continuous output associated with a data input using a distance metric, D, learnt for an input space. However, the method 400 depicted in FIG. 4 provides an example including additional optional steps. The method 400 may be performed on any suitable processor, for example, on a processor located on the server 120.

The method 400 begins at step 410, in which a data input that is associated with an input space is received. In embodiments of the invention, the data input that is received may be received during the design-phase of a suitable supervised learning model, i.e., for the sole purpose of training the model. In other embodiments of the invention, the data input that is received may be received during deployment of the model, i.e., when the model is being used in practice. In the context of the present disclosure, a data input being associated with an input space refers to a data input being an input to a particular problem for which an output value is predicted by a suitable supervised learning model by referring to an input space comprising input data points associated with said problem, i.e., previously provided as inputs to said problem. The method of providing said prediction is discussed in further detail below.

In an embodiment of the invention, the received data input may comprise a multidimensional variable. Accordingly, the received data input may have the same properties as those described above, with reference to multidimensional inputs from which the input data points 302 that make up the input space 312 are derived. The received data input may be transformed, standardised and reduced in dimensionality in the manner also described above. In an embodiment of the invention, the multidimensional input may be received in tabular form.

Following the receipt of a data input in step 410, the next step 420 of the method 400 comprises transforming the data input. This step describes a process of transforming the data input using a transform, L, that is determined when learning a distance metric, D, for the input space. In the context of the example input spaces 312 and 314 discussed with reference to FIG. 3, the transform, L, maps the input space 312 to the transformed input space 314. By performing this step, a correspondence between the form of the data input and the input space for which the distance metric, D, has been learnt for may be achieved. As will be subsequently discussed, this improves the accuracy of predicting the value of the continuous output associated with a data input associated with an input space using the distance metric, D, learnt for said input space.

Following the transformation of the data input in step 420, the next step 430 of the method 400 comprises predicting the value of a continuous output associated with the data input using a distance metric, D, learnt for the input space. The distance metric, D, is learnt according to embodiments of the disclosure provided herein.

The prediction of a value of a continuous output associated with a data input using a distance metric, D, learnt for an input space may be possible in the context of any suitable non-parametric model for supervised learning that relies on, and would benefit from, the use of a distance metric learnt for a given input space to improve the accuracy of predicting an output.

In embodiments of the invention, predicting the value of a continuous output associated with the data input using a distance metric, D, learnt for an input space may comprise employing a K-nearest neighbours, KNN, algorithm for the data input, with respect to the input space for which the distance metric, D, has been learnt.

As discussed in the background section, the KNN algorithm works on the premise that input data points having similar properties, e.g., associated continuous output values, exist in close proximity in an input space. Thus, by learning a suitable model-specific distance metric, D, over an input space, a more accurate determination of similarity between input data points, in terms of their respective associated continuous output values, may be achieved.

Referring now to FIG. 5, a schematic illustration of how a K-nearest neighbours, KNN, algorithm may be used according to an embodiment of the invention, is shown. The graph 500 shown in FIG. 5 represents the two-dimensional transformed input space 314 shown in graph 330 of FIG. 3.

In an embodiment of the invention, employing a K-nearest neighbours, KNN, algorithm for the data input, with respect to the input space for which the distance metric, D, has been learnt comprises using the distance metric, D, to calculate the distances from the data input to the other input data points in the input space. Referring to FIG. 5, the received data input 502 is mapped to the transformed input space 314. Using the distance metric, D, learnt for the input space, distances 506 from the received data input 502 to each of the other input data points 302 in the input space 314 may be calculated. This allows for determining the input data points that make up the K-nearest neighbours to the data input 502 in the input space 214.

In an embodiment of the invention, K may be a predetermined integer number that is fixed irrespective of the number of input data points 302 in the input space 312, 314. Alternatively, in other embodiments, K may be chosen dynamically depending on the number of data input points 302 in the input space 312, 314. For example, K may be greater for an input space having a greater number of input data points. In the example shown in graph 500 of FIG. 5, K is chosen to be three. The three nearest neighbours 504 to data input 502 have distances 506 between the data input 502 and each of the three nearest neighbours 504.

In an embodiment of the invention, predicting the value of the continuous output associated with the data input 502 using the distance metric, D, learnt for the input space 314 may comprise computing a mean of the values of the continuous outputs associated with the K-nearest neighbours 504 to the input data point 502 in the input space 314. Referring to graph 500, K has been chosen as three and therefore a prediction of the value of a continuous output associated with data input 502 may be computed by taking the mean of the continuous output values associated with each of the three nearest neighbours 504 to the data input 502 in the input space 314. For example, if the continuous output values associated with each of the three nearest neighbours 504 were 176.4 cm, 186 cm and 178.2 cm respectively, the value of the continuous output associated with the data input 502 would be 180.2 cm, i.e., the average of the three numerical values.

In an alternative embodiment of the invention, predicting the value of a continuous output associated with the data input 502 using the distance metric, D, learnt for an input space may comprise computing a weighted mean of the values of the continuous outputs associated with the K-nearest neighbours 504 to the input data point 502 in the input space 314, wherein each term of the weighted mean is weighted according to the inverse of the distance 506 of the neighbour 504 from the data input 502. By performing such a weighting, the prediction of the value of a continuous output associated with the data input 502 pays greater consideration to the degree of closeness between the data input 502 and the nearest neighbours 504 in the input space 314. Accordingly, the predicted value of the continuous output will be influenced more by nearest neighbours 504 closer to the data input 502 than nearest neighbours 504 further away, thus allowing for a more accurate prediction to be made relative to when all K nearest neighbours have equal influence over the predicted value.

As discussed above, supervised learning models may infer functions and metrics from training data, i.e., labelled input data points in an input space, to predict outputs for future data inputs. Accordingly, by increasing the pool of labelled input data points available to supervised learning models, the accuracy of predictions made by the supervised learning model may be improved.

In an embodiment of the invention, the method 400 may further comprise the steps of verifying the predicted value of a continuous output associated with the data input 502, labelling the data input 502 with the verified predicted value, adding the labelled data input 502 to the input space 314 and updating the distance metric, D. By verifying the predictions made before labelling and adding a data input 502 to the input space 314, it can be ensured that inaccurately labelled data inputs are filtered out and/or manually corrected so as to not distort the accuracy of the input space. Verification may be performed manually or otherwise, for example, based on predefined heuristic rules. If a prediction associated with a data input 502 is positively verified, the data input 502 may be labelled with the prediction and added to the input space. By adding to the pool of labelled input data points 302 available to a supervised learning model, it is ensured that the input space 312, 314 is continually improved for each input data point 302 processed and learnt from. This results in more accurate predictions being made.

By adapting the known LMNN model for outputs having a continuous value, known supervised learning models employing non-parametric models for predicting outputs having a continuous value may be improved, both in terms of accuracy and computational efficiency. As discussed above, by having a greater understanding of closeness of input data points in an input space, more informed and accurate predictions may subsequently be made. The improved distribution of input data points in an input space enabled by the methods disclosed herein ensure that less effort is required on the part of the non-parametric model in making a prediction. Without learning a distance metric over an input space according to the methods disclosed herein, models attempting to predict outputs having a continuous value to problems for given associated data inputs will be required to derive additional insights and metrics to compensate for the absence of the effects of neighbouring provided by the disclosed adapted LMNN model. Such known methods therefore require greater amounts of data and computational time and resource.

The methods and systems described herein may be used to predict outputs having a continuous value for a wide range of real-world problems across all areas of technology. As discussed, the methods and systems disclosed herein learn a distance metric, D, for an input space to provide a more improved organisation of the labelled input data points in an input space, thus providing a more accurate determination of a continuous output value for a received data input. Indeed, the more labelled input data points obtained by a particular model, the more accurate the resulting prediction is likely to be. Examples of input-output pairs for problems for which the value of a continuous output may be predicted are provided below. For each of these problems, the respective supervised learning models will take in real-world labelled data, from which to derive its resulting predictions in accordance with the methods and systems disclosed herein.

Example 1: Predicting the remaining lifetime of a drill bit.

| Inputs | | | | | Output |
|---|---|---|---|---|---|
| Drill bit diameter | Amount of use so far | Materials used on | Density of drill bit | Brand of manufacture | Remaining lifetime |
| 12 mm | 34 hours | Plasterboard; Brick; Steel | 7.874 g/cm$^3$ | DeWalt | 1853 hours |

Example 2: Determining the minimum required tyre pressure for a HGV for a long-distance trip.

| Inputs | | | | | Output |
|---|---|---|---|---|---|
| Weight of cargo | Age of HGV | Number of trips done over 600 miles | Main motorway of travel | Manufacturer | Minimum required tyre pressure |
| 1000 kg | 6 years | 4 | M1 | Mercedes | 8.6 bar |

Example 3: Determining the amount of insulin required daily for a diabetic.

| Inputs | | | | | Output |
|---|---|---|---|---|---|
| A verage blood sugar level for the last 7 days | Age | Ethnicity | Gender | Amount of steps taken daily | Amount of insulin required daily |
| 5.5 mmol/l | 63 years | Pakistani | Male | 10000 | 2.4 mmol/l |

The term "comprising" encompasses "including" as well as "consisting" e.g., a composition "comprising" X may consist exclusively of X or may include something additional e.g., X + Y.

Unless otherwise indicated each embodiment as described herein may be combined with another embodiment as described herein.

The methods described herein may be performed by software in machine readable form on a tangible storage medium e.g., in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc., and do not include propagated signals. The software can be suitable for execution on a parallel processor or a serial processor such that the method steps may be carried out in any suitable order, or simultaneously. This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilizing conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought. Any of the modules described above may be implemented in hardware or software.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

Embodiments of the present disclosure are operative with numerous general purpose or special purpose computing system environments or configurations. Examples of well-known computing systems, environments, and/or configurations that may be suitable for use with aspects of the disclosure include, but are not limited to, mobile computing devices, personal computers (e.g. desktop computers), server computers, hand-held or laptop devices, multiprocessor systems, gaming consoles, microprocessor-based systems, set top boxes, programmable consumer electronics, mobile telephones, network PCs, minicomputers, mainframe computers, distributed computing environments that include any of the above systems or devices, and the like.

Any combination of one or more computer-usable or computer-readable media may be utilised. For example, a computer-readable medium may include one or more of a portable computer diskette, a hard disk, a random-access memory (RAM) device, a read-only memory (ROM) device, an erasable programmable read-only memory (EPROM or Flash memory) device, a portable compact disc read-only memory (CDROM), an optical storage device, and a magnetic storage device. Computer program code for carrying out operations of embodiments of the present disclosure may be written in any combination of one or more programming languages.

The flowcharts and block diagrams illustrate the architecture, functionality, and operation of possible implementations of systems, methods, and computer program products according to various embodiments of the present disclosure. In this regard, each block in the flowcharts or block diagrams may represent a module, segment, or portion of code, which comprises one or more executable instructions for implementing the specified logical function(s). It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions. These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowcharts and/or block diagrams.

**Embodiments of the Invention**

The following is a list of embodiments of the present disclosure:

Embodiment 1: A computer-implemented method for learning a distance metric, D, for an input space according to a large margin nearest neighbour model adapted for outputs having a continuous value, the method comprising

determining a transform, L, for the input space, wherein the transform, L, is configured to correlate the distance between input data points in the input space with the difference between the values of continuous outputs associated with the input data points;
applying the transform, L, to the input space; and
learning the distance metric, D, from the transformed input space.

Embodiment 2: The method of embodiment 1, wherein determining a transform, L, for the input space comprises determining and minimising a loss function with respect to the transform, L.

Embodiment 3: The method of any preceding embodiment, wherein determining the loss function comprises, for each input data point in the input space, identifying a predetermined number of targets and imposters from the other input data points in the input space.

Embodiment 4: The method of any preceding embodiment, wherein the predetermined number of targets and imposters are identified from the 2X nearest neighbours, in terms of distance, from the input data point under consideration, wherein the targets are those X neighbours of the 2X nearest neighbours with associated continuous output values closest to the continuous output value associated with the input data point under consideration, wherein the imposters are the remaining X neighbours, and wherein X is a predetermined value.

Embodiment 5: The method of any preceding embodiment, wherein each term in the loss function is weighted according to the relative difference between the difference in the values of the continuous outputs associated with the input data point under consideration and an identified imposter and the difference in the values of the continuous outputs associated with the input data point under consideration and an identified target.

Embodiment 6: The method of any preceding embodiment, wherein the transform, L, is configured to minimise the distance between each input data point in the input space and its targets and maximise the distance between each input data point in the input space and its imposters.

Embodiment 7: The method of any preceding embodiment, wherein each term in the loss function is weighted according to how well the relative distance between input data points in the input space reflects the relative difference in their associated values of continuous outputs, wherein the terms of the loss function for which the input data points under consideration have a stronger positive correlation between the relative distance between the input data points and the relative difference in their associated values of continuous outputs are more heavily weighted.

Embodiment 8: The method of any preceding embodiment, wherein learning the distance metric, D, from the transformed input space comprises computing the Euclidian distances between input data points in the transformed input space.

Embodiment 9: The method of any preceding embodiment, wherein the input data points are derived from multidimensional inputs that have been standardised.

Embodiment 10: The method of any preceding embodiment, wherein the input data points are labelled with an associated continuous output value.

Embodiment 11: The method of any preceding embodiment, wherein the transform, L, comprises a linear transform.

Embodiment 12: A computer-implemented method for predicting the value of a continuous output, the method comprising predicting the value of a continuous output associated with a data input using a distance metric, D, learnt for an input space according to the method of any preceding embodiment.

Embodiment 13: The method of any preceding embodiment, comprising

> receiving the data input, wherein the data input is associated with the input space;
> transforming the data input using the transform, L.

Embodiment 14: The method of any preceding embodiment, wherein predicting the value of a continuous output associated with a data input using a distance metric, D, learnt for an input space comprises employing a K-nearest neighbours algorithm for the data input, with respect to the input space for which the distance metric, D, has been learnt.

Embodiment 15: The method of any preceding embodiment, wherein employing a K-nearest neighbours algorithm for the data input, with respect to the input space for which the distance metric, D, has been learnt comprises using the distance metric, D, to calculate the distances from the data input to the other input data points in the input space.

Embodiment 16: The method of any preceding embodiment, wherein predicting the value of a continuous output associated with the data input using a distance metric, D, learnt for an input space comprises computing a mean of the values of the continuous outputs associated with the K-nearest neighbours to the input data point in the input space, wherein K is a predetermined integer number.

Embodiment 17: The method of any preceding embodiment, wherein predicting the value of a continuous output associated with the data input using a distance metric, D, learnt for an input space comprises computing a weighted mean of the values of the continuous outputs associated with the K-nearest neighbours to the input data point in the input space, wherein K is a predetermined integer number, and wherein each term of the weighted mean is weighted according to the inverse of the distance of the neighbour from the data input.

Embodiment 18: The method of any preceding embodiment, comprising

verifying the predicted value of a continuous output associated with the data input;
labelling the data input with the verified predicted value;
adding the labelled data input to the input space; and
updating the distance metric, D.

Embodiment 19: The method of any preceding embodiment, wherein the data input is a multidimensional variable, wherein each variable comprises a discrete or continuous variable.

Embodiment 20: The method of any preceding embodiment, wherein the value of the continuous output is a numerical value.

Embodiment 21: A system comprising one or more processors configured to perform the method of any one of embodiments 1 to 20.

Embodiment 22: A computer readable medium comprising instructions for causing a computer to execute instructions according to the method of any one of embodiments 1 to 20.

Embodiment 23: A computer program comprising instructions which, when the program is executed by a computer, cause the computer to carry out the steps of any one of embodiments 1 to 20.

**Claims**

1. A computer-implemented method for learning a distance metric, D, for an input space according to a large margin nearest neighbour model adapted for outputs having a continuous value, the method comprising

   determining a transform, L, for the input space, wherein the transform, L, is configured to correlate the distance between input data points in the input space with the difference between the values of continuous outputs associated with the input data points;
   applying the transform, L, to the input space; and
   learning the distance metric, D, from the transformed input space.

2. The method of claim 1, wherein determining a transform, L, for the input space comprises determining and minimising a loss function with respect to the transform, L.

3. The method of claim 2, wherein determining the loss function comprises, for each input data point in the input space, identifying a predetermined number of targets and imposters from the other input data points in the input space.

4. The method of claim 3, wherein the predetermined number of targets and imposters are identified from the 2X nearest neighbours, in terms of distance, from the input data point under consideration, wherein the targets are those X neighbours of the 2X nearest neighbours with associated continuous output values closest to the continuous output value associated with the input data point under consideration, wherein the imposters are the remaining X neighbours, and wherein X is a predetermined value.

5. The method of claim 3 or claim 4, wherein each term in the loss function is weighted according to the relative difference between the difference in the values of the continuous outputs associated with the input data point under consideration and an identified imposter and the difference in the values of the continuous outputs associated with the input data point under consideration and an identified target.

6. The method of any one of claims 3 to 5, wherein the transform, L, is configured to minimise the distance between each input data point in the input space and its targets and maximise the distance between each input data point in the input space and its imposters.

7. The method of any one of claims 2 to 6, wherein each term in the loss function is weighted according to how well the relative distance between input data points in the input space reflects the relative difference in their associated values of continuous outputs, wherein the terms of the loss function for which the input data points under consideration have a stronger positive correlation between the relative distance between the input data points and the relative difference in their associated values of continuous outputs are more heavily weighted.

8. The method of any preceding claim, wherein learning the distance metric, D, from the transformed input space comprises computing the Euclidian distances between input data points in the transformed input space.

9. A computer-implemented method for predicting the value of a continuous output, the method comprising predicting the value of a continuous output associated with a data input using a distance metric, D, learnt for an input space according to the method of any one of claims 1 to 8.

10. The method of claim 9, comprising

   receiving the data input, wherein the data input is associated with the input space;
   transforming the data input using the transform, L.

11. The method of claim 10, wherein predicting the value of a continuous output associated with a data input using a distance metric, D, learnt for an input space comprises employing a K-nearest neighbours algorithm for the data input, with respect to the input space for which the distance metric, D, has been learnt.

12. The method of claim 11, wherein employing a K-nearest neighbours algorithm for the data input, with respect to the input space for which the distance metric, D, has been learnt comprises using the distance metric, D, to calculate the distances from the data input to the other input data points in the input space.

13. The method of claim 11 or 12, wherein predicting the value of a continuous output associated with the data input using a distance metric, D, learnt for an input space comprises computing a mean of the values of the continuous outputs associated with the K-nearest neighbours to the input data point in the input space, wherein K is a predetermined integer number.

14. The method of claim 11 or 12, wherein predicting the value of a continuous output associated with the data input using a distance metric, D, learnt for an input space comprises computing a weighted mean of the values of the continuous outputs associated with the K-nearest neighbours to the input data point in the input space, wherein K is a predetermined integer number, and wherein each term of the weighted mean is weighted according to the inverse of the distance of the neighbour from the data input.

15. The method of claim 9, comprising

   verifying the predicted value of a continuous output associated with the data input;
   labelling the data input with the verified predicted value;
   adding the labelled data input to the input space; and
   updating the distance metric, D.

16. A system comprising one or more processors configured to perform the method of any one of claims 1 to 15.

17. A computer readable medium comprising instructions for causing a computer to execute instructions according to the method of any one of claims 1 to 15.

18. A computer program comprising instructions which, when the program is executed by a computer, cause the computer to carry out the steps of any one of claims 1 to 15.

## FIG. 1

## FIG. 2

| Determining a transform, L, for an input space | 210 |
| Applying the transform, L, to the input space | 220 |
| Learning a distance metric, D, from the transformed input space | 230 |

# FIG. 3

☆ : data point under consideration
○ : targets
△ : imposters

EP 4 290 427 A1

## FIG. 4

400

| Receiving a data input associated with an input space | 410 |

↓

| Transforming the data input | 420 |

↓

| Predicting the value of a continuous output associated with the data input using a distance metric, D, learnt for the input space | 430 |

## FIG. 5

500

314

☆ :data input

$x_2$

$x_1$

Europäisches
Patentamt
European
Patent Office
Office européen
des brevets

# EUROPEAN SEARCH REPORT

Application Number

EP 22 17 7383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | K. C. ASSI ET AL.: "Modified Large Margin Nearest Neighbor Metric Learning for Regression", IEEE SIGNAL PROCESSING LETTERS, vol. 21, no. 3, 22 January 2014 (2014-01-22), pages 292-296, XP011538286, ISSN: 1070-9908, DOI: 10.1109/LSP.2014.2301037 [retrieved on 2014-01-23] * sections II and III, and appendix * | 1-18 | INV. G06N20/00 |
| X | Y. WANG ET AL.: "Interpoint Similarity-Based Uncertainty Measure for Robust Learning", IEEE TRANSACTIONS ON SYSTEMS, MAN, AND CYBERNETICS: SYSTEMS, vol. 50, no. 12, 18 November 2020 (2020-11-18), pages 5386-5394, XP011820563, ISSN: 2168-2216, DOI: 10.1109/TSMC.2018.2878789 [retrieved on 2020-11-17] * section II-B and appendix * | 1-18 | |
| X | F. Leon et al.: "Evolutionary Algorithm for Large Margin Nearest Neighbour Regression" In: "Computational Collective Intelligence; Lecture Notes in Computer Science", 24 October 2015 (2015-10-24), Springer International Publishing, XP047323781, ISBN: 978-3-319-24069-5 vol. 9329, pages 305-315, DOI: 10.1007/978-3-319-24069-5_29, [retrieved on 2015-10-24] * sections 3 and 4 * | 1-18 | |

TECHNICAL FIELDS
SEARCHED (IPC)

G06N

The present search report has been drawn up for all claims

| Place of search | Date of completion of the search | Examiner |
|---|---|---|
| The Hague | 17 November 2022 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)